# EUROPEAN PATENT APPLICATION

(11) **EP 2 966 317 A1**
(43) Date of publication of application: **13.01.2016**
(21) Application number: 15175228.4
(22) Date of filing: 03.07.2015
(51) Int. Cl.: F16H 1/16, F16H 55/24, B62D 5/04

(54) **WORM SPEED REDUCER AND ELECTRIC POWER STEERING SYSTEM USING THE SAME**

(30) Priority: 09.07.2014 JP 2014141552
(71) Applicant: JTEKT CORPORATION, Osaka-shi Osaka 542-8502 (JP)
(72) Inventor: YAMAUCHI, Mai, Osaka-shi, Osaka 542-8502 (JP)
(74) Representative: Winter, Brandl, Fürniss, Hübner, Röss, Kaiser, Polte - Partnerschaft mbB

(57) **Abstract**

A worm speed reducer (17) includes a worm wheel (19) that has an outer peripheral surface (43) having a tooth portion (19c) formed therein, a worm shaft (18), and a biasing member (60). The worm shaft (18) has a meshing portion (18d) that meshes with the tooth portion (19c) between a first end (18a) located adjacent to the electric motor (16) and a second end (18b) located on the opposite side. The distance (L2) between the meshing center (B) and the second end (18b) is larger than the distance (L1) between the meshing center (B) and the first end (18a). The biasing member (60) biases the second end (18b) by use of the first end (18a) serving as a fulcrum.

## Description

### BACKGROUND OF THE INVENTION

### 1. Field of the Invention

The present invention relates to worm speed reducers and electric power steering systems using the same.

### 2. Description of the Related Art

A worm speed reducer included in an electric power steering system described in Japanese Patent Application Publication No. 2013-226898 (JP 2013-226898 A) includes a worm shaft, a worm wheel, and a backlash eliminating mechanism. The worm shaft has a tooth portion provided in an intermediate portion between first and second ends that are separated from each other in the axial direction of the worm shaft. The worm wheel includes an annular core and a synthetic resin member surrounding the core and having a tooth portion formed in its outer periphery. The backlash eliminating mechanism includes a mechanism in which a biasing member comprised of a helical compression spring elastically biases the worm shaft toward the worm wheel.

In order to eliminate backlash between the worm shaft and the worm wheel which is produced due to wear of the synthetic resin member of the worm wheel in the worm speed reducer described in JP 2013-226898 A, it is necessary to set a load that presses the worm shaft against the worm wheel (hereinafter referred to as the pressing load) to a large initial value by increasing a biasing load of the biasing member at the time of product shipment.

Methods to increase the biasing load of the biasing member include to increase the set load of the biasing member by further compressing the biasing member and to increase rigidity of the biasing member by increasing the diameter of a spring material of the helical compression spring of the biasing member etc.

Increasing the set load increases stress that is applied to the biasing member, which may reduce durability of the biasing member. Increasing the durability of the biasing member by changing its dimensions may make it difficult to secure the space for the biasing member. If the dimensions of the biasing member are changed according to the required pressing load, a biasing member according to the specifications of the worm speed reducer need be individually prepared according to the specifications of the worm speed reducer. This is not preferable for using common components.

### SUMMARY OF THE INVENTION

It is an object of the present invention to provide a worm speed reducer capable of increasing a pressing load for a worm shaft against a worm wheel without increasing a set load of a biasing member and without changing the dimensions of the biasing member, and an electric power steering system including the worm speed reducer.

According to one aspect of the present invention, a worm speed reducer includes: an electric motor that generates a driving force; a worm wheel that has an outer peripheral surface having a tooth portion formed therein; a worm shaft that has a first end located adjacent to the electric motor, a second end located on an opposite side of the first end, and a meshing portion located between the first and second ends and meshing the tooth portion of the worm wheel, and that rotates as the driving force of the electric motor is transmitted to the first end; and a biasing member that biases the second end by use of the first end serving as a fulcrum so as to reduce a center-to-center distance between the worm wheel and the worm shaft. In the worm shaft, a distance between a meshing center of the meshing portion and the second end in an axial direction of the worm shaft is larger than that between the meshing center and the first end in the axial direction.

In the worm speed reducer of the above aspect, the distance between the meshing center and the second end in the axial direction of the worm shaft may be larger than 1.1 times the distance between the meshing center and the first end in the axial direction.

According to another aspect of the present invention, an electric power steering system includes: the worm speed reducer of the above aspect.

In the worm speed reducer of the above aspect, the worm shaft of the worm speed reducer rotates as the driving force of the electric motor is transmitted to the first end located adjacent to the electric motor. The meshing portion between the first and second ends of the worm shaft meshes with the tooth portion of the worm wheel. The second end located on the opposite side of the first end of the worm shaft is biased by the biasing member by use of the first end serving as the fulcrum so that the center-to-center distance between the worm wheel and the worm shaft is reduced. This eliminates backlash between the tooth portion of the worm wheel and the meshing portion of the worm shaft.

In the worm shaft, the distance between the meshing center of the meshing portion and the second end in the axial direction of the worm shaft is larger than that between the meshing center and the first end in the axial direction of the worm shaft.

That is, by changing the ratio between these distances (worm span ratio) to increase the distance between the meshing center and the second end, a pressing load for the meshing portion of the worm shaft against the worm wheel can be increased without changing a biasing load of the biasing member, according to the principle of leverage.

The pressing load can thus be increased while using this biasing member, namely without increasing a set load of the biasing member and without changing the dimensions of the biasing member.

It is preferable that the distance between the meshing center and the second end be larger than 1.1 times the distance between the meshing center and the first end.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram showing the general configuration of an electric power steering system 1 according to an embodiment of the present invention;
FIG. 2 is a sectional view showing the configuration of a main part of a worm speed reducer 17 included in the electric power steering system 1;
FIG. 3 is a sectional view taken along line III-III in FIG. 2;
FIG. 4 is a perspective view of a biasing member 60; and
FIG. 5 is a diagram schematically showing the positional relation in the axial direction X among a meshing center B, a biased portion E, and a fulcrum portion P of a worm shaft 18.

### DETAILED DESCRIPTION OF EMBODIMENTS

An embodiment of the present invention will be described in detail below with reference to the accompanying drawings.

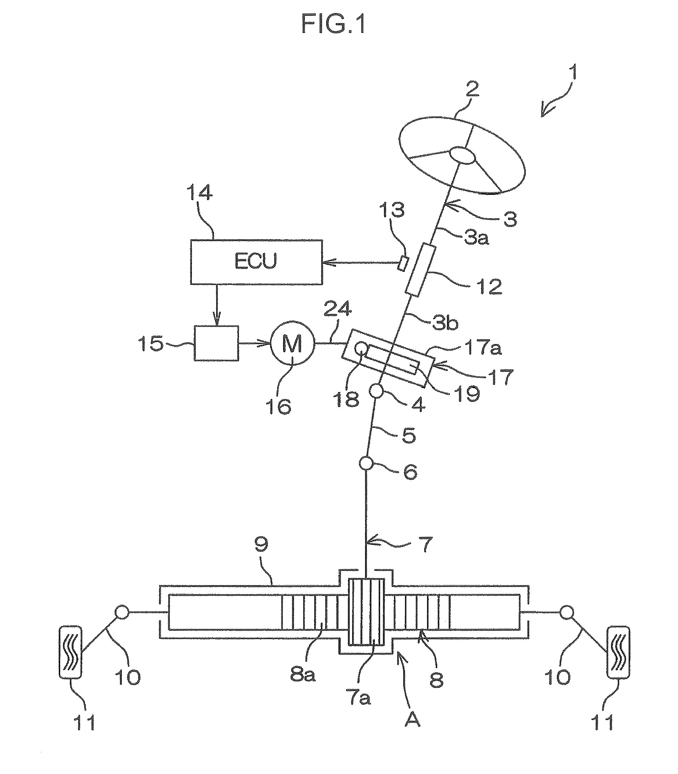

FIG. 1 is a schematic diagram showing the general configuration of an electric power steering system 1 according to an embodiment of the present invention. The electric power steering system 1 includes a steering shaft 3 having its one end coupled to a steering member 2 such as a steering wheel, an intermediate shaft 5 coupled to the steering shaft 3 via a universal joint 4, a pinion shaft 7 coupled to the intermediate shaft 5 via a universal joint 6, and a rack bar 8 extending in the lateral direction of a vehicle body (not shown).

A pinion 7a at an end of the pinion shaft 7 meshes with a rack 8a of the rack bar 8. A steering operation mechanism A comprised of a rack-and-pinion mechanism including the pinion shaft 7 and the rack bar 8 is thus formed.

The rack bar 8 is accommodated in a housing 9 that is fixed to the vehicle body. The rack bar 8 is supported by the housing 9 via a plurality of bearings (not shown) and makes a linear reciprocating motion in the lateral direction. Both ends of the rack bar 8 protrude from both sides of the housing 9, and a tie rod 10 is coupled to each end. Each tie rod 10 is coupled to a corresponding one of steered wheels 11 via a knuckle arm (not shown).

When a driver steers the steering member 2 and the steering shaft 3 rotates, this rotation is converted to a linear motion of the rack bar 8 in the lateral direction by the pinion 7a and the rack 8a. The steered wheels 11 are thus steered and a vehicle changes its traveling direction.

The steering shaft 3 includes an input-side first steering shaft 3a having its one end coupled to the steering member 2, an output-side second steering shaft 3b connecting to the pinion shaft 7, and a torsion bar 12 that collinearly couples the first steering shaft 3a and the second steering shaft 3b so that the first and second steering shafts 3a, 3b can rotate relative to each other.

The electric power steering system 1 further includes a torque sensor 13 that detects steering torque of the steering member 2 based on the relative rotation displacement between the first and second steering shafts 3a, 3b, an electronic control unit (ECU) 14, a drive circuit 15, an electric motor 16 for steering assist, and a worm speed reducer 17. The ECU 14 and the drive circuit 15 may not be components of the electric power steering system 1 but components of the vehicle body to which the electric power steering system 1 is attached. The electric motor 16 is a component that forms a part of the worm speed reducer 17.

The torque sensor 13 outputs the torque detection result to the ECU 14. The ECU 14 drivingly controls the electric motor 16 via the drive circuit 15 based on the torque detection result, the vehicle speed detection result received from a vehicle speed sensor (not shown), etc. to cause the electric motor 16 to generate an assist force.

Rotation that is output from a rotary shaft 24 of the electric motor 16 is reduced in speed by the worm speed reducer 17, and is then transmitted to the pinion shaft 7 and converted to a linear motion of the rack bar 8. Steering is thus assisted.

The worm speed reducer 17 includes a housing 17a, a worm shaft 18 that is drivingly rotated by the electric motor 16, and a worm wheel 19 that meshes with the worm shaft 18 and that is coupled to the second steering shaft 3b of the steering shaft 3 so that the worm wheel 19 can rotate together therewith. The rotation that is output from the electric motor 16 is reduced in speed when transmitted from the worm shaft 18 to the worm wheel 19 in the worm speed reducer 17.

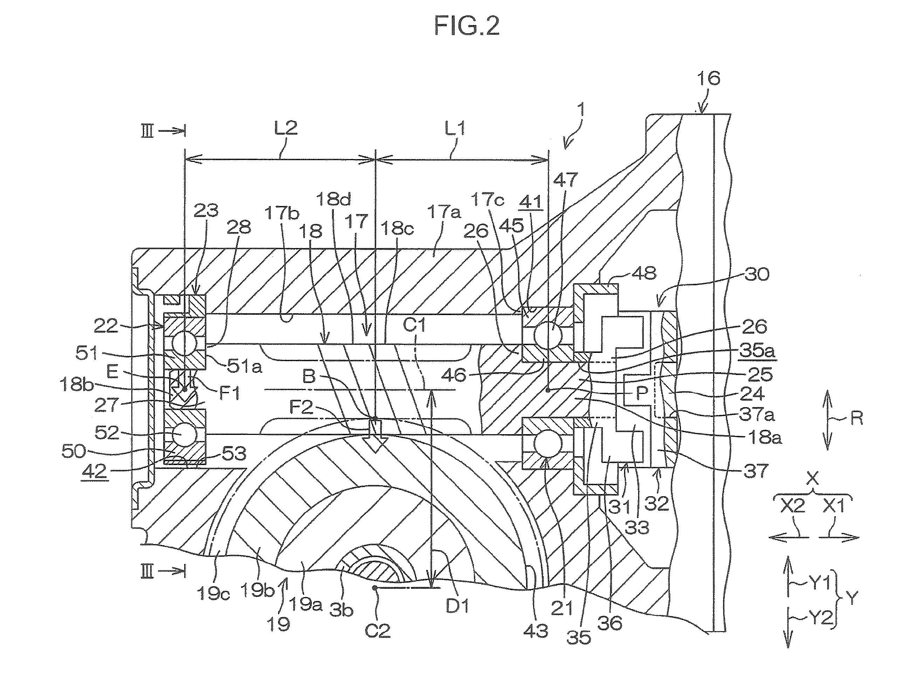

FIG. 2 is a sectional view showing the configuration of a main part of the worm speed reducer 17 included in the electric power steering system 1.

The worm speed reducer 17 includes a first bearing 21, a second bearing 22, and an anti-backlash system (ABLS) structure 23 in addition to the electric motor 16, the worm shaft 18, the housing 17a, and the worm wheel 19. Each member of the worm speed reducer 17 will be described below.

The worm shaft 18 has a substantially columnar shape. In the following description, the direction etc. of each member may be specified by using the axial direction X and the radial direction R of the worm shaft 18. Reference character X1 herein represents one side in the axial direction X (the right side in FIG. 2), and reference character X2 herein represents the other side in the axial direction X (the left side in FIG. 2).

The worm shaft 18 is disposed coaxially with the rotary shaft 24 of the electric motor 16. The worm shaft 18 has a first end 18a and a second end 18b as its both ends in the axial direction X. The first end 18a is an end on one side X1 of the worm shaft 18, and the second end 18b is an end on the other side X2 of the worm shaft 18. The first end 18a is disposed closer to the electric motor 16 (on one side X1) than the second end 18b.

The first end 18a includes a small diameter portion 25 and a stepped portion 26 which are formed integrally with each other. The small diameter portion 25 is a distal end of the first end 18a which has a smaller diameter than the remaining portion of the first end 18a. The stepped portion 26 forms the boundary between the small diameter portion 25 and the worm shaft 18 other than the small diameter portion 25.

The second end 18b includes a small diameter portion 27 and a stepped portion 28 which are formed integrally with each other. The small diameter portion 27 is a distal end of the second end 18b which has a smaller diameter than the remaining portion of the second end 18b. The stepped portion 28 forms the boundary between the small diameter portion 27 and the worm shaft 18 other than the small diameter portion 27.

A meshing portion 18d is formed in an outer peripheral surface 18c of the worm shaft 18 which extends between the first and second ends 18a, 18b. The meshing portion 18d extends in a predetermined range in the axial direction X and is formed by a plurality of helical teeth extending in the axial direction X. The meshing portion 18d is located between the first end 18a and the second end 18b.

The small diameter portion 25 of the first end 18a of the worm shaft 18 faces an end of the rotary shaft 24 of the electric motor 16 in the axial direction X, and is coupled to the rotary shaft 24 via a joint 30. Specifically, the joint 30 includes a first rotary member 31, a second rotary member 32, and an elastic member 33.

The first rotary member 31 includes a cylindrical boss 35 and a cylindrical flange 36. The flange 36 is connected to one axial end of the boss 35 and has a larger diameter than the boss 35. The boss 35 has a fitting hole 35a in which the first end 18a of the worm shaft 18 is press-fitted. The first rotary member 31 is fixed to the small diameter portion 25 of the first end 18a and can rotate together with the worm shaft 18.

The second rotary member 32 includes a cylindrical body 37 that faces the flange 36 of the first rotary member 31 in the axial direction X. The body 37 has a fitting hole 37a in which the rotary shaft 24 of the electric motor 16 is press-fitted. The second rotary member 32 is fixed to the rotary shaft 24 of the electric motor 16 and can rotate together with the rotary shaft 24.

The elastic member 33 is interposed between the first rotary member 31 and the second rotary member 32. The elastic member 33 transmits rotation of the rotary shaft 24 from the second rotary member 32 to the first rotary member 31 to cause the first and second rotary members 31, 32 to rotate together.

The assist force that is output from the electric motor 16 is transmitted from the rotary shaft 24 to the second rotary member 32, and is transmitted from the second rotary member 32 to the first rotary member 31 via the elastic member 33. The driving force that is transmitted to the first rotary member 31 is transmitted to the small diameter portion 25 of the first end 18a of the worm shaft 18. The worm shaft 18 is thus drivingly rotated. That is, the worm shaft 18 is drivingly rotated as the assist force of the electric motor 16 is transmitted via the joint 30 to the first end 18a. Reference character C1 herein represents the rotation center of the worm shaft 18.

The housing 17a has an internal space. An inner peripheral surface 17b herein refers to a portion that defines the internal space of the housing 17a. The worm shaft 18 is accommodated in the housing 17a.

The housing 17a has a first bearing hole 41 as a part of the internal space of the housing 17a. The first bearing hole 41 is formed at the same position in the axial direction X as the first end 18a of the worm shaft 18 and extends in the axial direction X. The inner peripheral surface 17b of the housing 17a has a stepped portion 17c as an end of the first bearing hole 41 in the axial direction X. The stepped portion 17c protrudes toward the worm shaft 18. The housing 17a has a second bearing hole 42 formed at the same position in the axial direction X as the second end 18b of the worm shaft 18.

The worm wheel 19 has an annular shape and is accommodated in the housing 17a. As described above, the worm wheel 19 is fixed to the second steering shaft 3b of the steering shaft 3 and rotates together with the second steering shaft 3b. Reference character C2 herein represents the rotation center of the worm wheel 19. The rotation center C2 is perpendicular to the rotation center C1 of the worm shaft 18. The worm wheel 19 includes an annular core 19a and a synthetic resin member 19b surrounding the core 19a. The core 19a is coupled to the second steering shaft 3b so that the core 19a can rotate together therewith. For example, the core 19a is inserted into a mold when resin-molding the synthetic resin member 19b. A tooth portion 19c is formed in an outer peripheral surface 43 of the synthetic resin member 19b. The tooth portion 19c is formed by a plurality of teeth meshing with the plurality of teeth of the meshing portion 18d of the worm shaft 18. In the portion where the meshing portion 18d meshes with the tooth portion 19c, a plurality of teeth mesh with each other at the same time. The center of a part of the meshing portion 18d of the worm shaft 18 in the axial direction X which meshes with the tooth portion 19c of the worm wheel 19 is herein referred to as the meshing center B.

Each of the first and second bearings 21, 22 is, e.g., a ball bearing and has an annular overall shape. The first bearing 21 is fitted on the first end 18a of the worm shaft 18 when accommodated in the first bearing hole 41. The second bearing 22 is fitted on the second end 18b of the worm shaft 18 when accommodated in the second bearing hole 42. The first and second bearings 21, 22 rotatably support the worm shaft 18 in the housing 17a.

The first bearing 21 supports the first end 18a of the worm shaft 18. The first bearing 21 includes an outer ring 45, an inner ring 46, and spherical rolling elements 47 disposed between the outer ring 45 and the inner ring 46.

The outer ring 45 is fitted in the first bearing hole 41. The outer ring 45 is supported by the inner peripheral surface 17b of the housing 17a. The outer ring 45 contacts the stepped portion 17c from the one side X1.

A plug 48 is screwed and fitted in the first bearing hole 41 from the one side X1. The plug 48 contacts the outer ring 45 from the one side XI. The outer ring 45 is pressed against the stepped portion 17c by the plug 48. The first bearing 21 is thus positioned in the axial direction X in the housing 17a.

The inner ring 46 is fitted on the first end 18a of the worm shaft 18. The inner ring 46 contacts the stepped portion 26 from the one side X1. The boss 35 of the first rotary member 31 contacts the inner ring 46 from the one side X1. The inner ring 46 is pressed against the stepped portion 26 by the boss 35.

The second bearing 22 supports the second end 18b of the worm shaft 18. The second bearing 22 includes an outer ring 50, an inner ring 51, and spherical rolling elements 52 disposed between the outer ring 50 and the inner ring 51.

The outer ring 50 is separated from the inner peripheral surface 17b of the housing 17a which defines the second bearing hole 42.

The inner ring 51 is fitted on the small diameter portion 27 of the second end 18b so as to rotate together therewith. An end face 51a of the inner ring 51 on the one side X1 contacts the stepped portion 28 from the other side X2. This restricts movement of the inner ring 51 in the axial direction X relative to the worm shaft 18.

The distance between the rotation center C1 of the worm shaft 18 and the rotation center C2 of the worm wheel 19 is herein referred to as the center-to-center distance D1 between the worm shaft 18 and the worm wheel 19. The direction in which the center-to-center distance D1 increases is herein referred to as the increasing direction Y1, and the direction in which the center-to-center distance D1 decreases is herein referred to as the decreasing direction Y2. The increasing direction Y1 and the decreasing direction Y2 are collectively referred to as the increasing/decreasing direction Y.

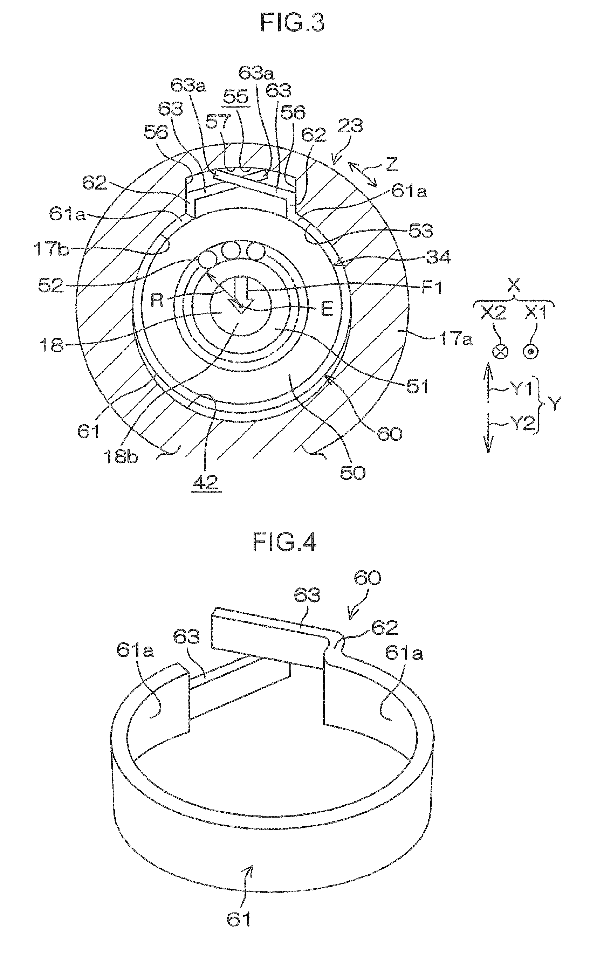

FIG. 3 is a sectional view taken along line III-III in FIG. 2. FIG. 4 is a perspective view of a biasing member 60.

Referring to FIG. 3, a part 53 of the inner peripheral surface 17b of the housing 17a which defines the second bearing hole 42 has a recessed portion 55 that is recessed in the increasing direction Y1. The recessed portion 55 is defined in the circumferential direction Z of the inner peripheral surface 17b by a pair of inner walls 56 extending in the increasing direction Y1 from the inner peripheral surface 17b of the housing 17a. The recessed portion 55 is defined in the increasing direction Y1 by a bottom surface 57 that connects the ends of the pair of inner walls 56 on the increasing direction Y1 side. The bottom surface 57 is a curved surface that extends in the circumferential direction Z. The recessed portion 55 communicates with the second bearing hole 42 from the increasing direction Y1 side.

The ABLS structure 23 is a mechanism that suppresses backlash that is produced between the meshing portion 18d of the worm shaft 18 and the tooth portion 19c of the worm wheel 19 due to wear of the synthetic resin member 19b of the worm wheel 19. The ABLS structure 23 is formed by the biasing member 60.

The biasing member 60 is also called an ABLS spring. For example, the biasing member 60 is a member produced by processing a sheet metal. The biasing member 60 is interposed between the part 53 of the inner peripheral surface 17b of the housing 17a and the outer ring 50 of the second bearing 22. The biasing member 60 includes a main portion 61, rotation restricting portions 62, and elastic tongue portion 63s. The rotation restricting portions 62 and the elastic tongue portions 63 are formed integrally with the main portion 61.

As shown in FIG. 3, the main portion 61 has a substantially C shape rotated counterclockwise by 90°, as viewed in the axial direction X. The main portion 61 is fitted on the outer ring 50. The main portion 61 extends along the outer periphery of the outer ring 50 of the second bearing 22.

For example, one rotation restricting portion 62 is provided at each of both ends 61a a of the main portion 61 in the circumferential direction Z. Each rotation restricting portion 62 extends in the increasing direction Y1 from a corresponding one of the ends 61a. Referring to FIG. 4, the width each rotation restricting portion 62 in the axial direction X of is smaller than that of the main portion 61 in the axial direction X. The pair of rotation restricting portions 62 are shifted from each other in the axial direction X.

For example, referring back to FIG. 3, one elastic tongue portion 63 is provided for each of the rotation restricting portions 62. Each elastic tongue portion 63 is supported like a cantilever by a corresponding one of the rotation restricting portions 62. Each elastic tongue portion 63 extends in a direction tilted with respect to the increasing direction Y1. An end 63a of each elastic tongue portion 63 on the opposite side of a corresponding one of the rotation restricting portions 62 is located on the increasing direction Y1 side with respect to the rotation restricting portion 62. The pair of elastic tongue portions 63 cross each other as viewed in the axial direction X so that the elastic tongue portions 63 together form a substantially X shape.

The pair of rotation restricting portions 62 and the pair of elastic tongue portions 63 of the biasing member 60 are accommodated in the recessed portion 55.

Each of the pair of rotation restricting portions 62 extends along a corresponding one of the inner walls 56 and restricts rotation of the biasing member 60 in the circumferential direction Z.

The second bearing 22 is supported in the second bearing hole 42 by the housing 17a via the biasing member 60.

The ends 63a of the pair of elastic tongue portions 63 contact the bottom surface 57 of the recessed portion 55 from the decreasing direction Y2 side. The pair of elastic tongue portions 63 are thus deflected in the increasing/decreasing direction Y (the vertical direction in FIG. 3). As described above, the inner ring 51 of the second bearing 22 is fitted on the second end 18b of the worm shaft 18. The outer ring 50 of the second bearing 22 is surrounded by the main portion 61 of the biasing member 60. Since the pair of elastic tongue portions 63 attempt to return to their original state, the elastic tongue portions 63 bias the second end 18b of the worm shaft 18 in the decreasing direction Y2 via the main portion 61 and the second bearing 22. Referring to FIG. 2, the biasing member 60 thus biases the second end 18b of the worm shaft 18 in the decreasing direction Y2 via the second bearing 22 such that the center-to-center distance D1 decreases. The load that is applied from the biasing member 60 to the worm shaft 18 at this time is herein referred to as the biasing load F1.

A part of the second end 18b of the worm shaft 18 which is subjected to the biasing load F1 is herein referred to as the biased portion E. The position of the biased portion E in the axial direction X is the middle of the biasing member 60 in the axial direction X.

The first end 18a of the worm shaft 18 is positioned in the axial direction X and the radial direction R by the first bearing 21. The worm shaft 18 is thus biased by the biasing member 60 so that a part of the first end 18a which is fixed by the first bearing 21 serves as a fulcrum. A central part of the first end 18a of the worm shaft 18 which serves as the fulcrum is herein referred to as the fulcrum portion P. The position of the fulcrum portion P in the axial direction X matches the middle of the first bearing 21 in the axial direction X.

When subjected to the biasing load F1, the biased portion E of the worm shaft 18 is biased in the decreasing direction Y2 with the fulcrum portion P serving as the fulcrum. The meshing portion 18d of the worm shaft 18 is thus pressed against the tooth portion 19c of the worm wheel 19. The load that presses the meshing portion 18d against the tooth portion 19c is herein referred to as the pressing load F2. The meshing portion 18d is constantly pressed against the tooth portion 19c by the pressing load F2 that is generated by the biasing member 60 of the ABLS structure 23. The center-to-center distance D1 is thus kept constant.

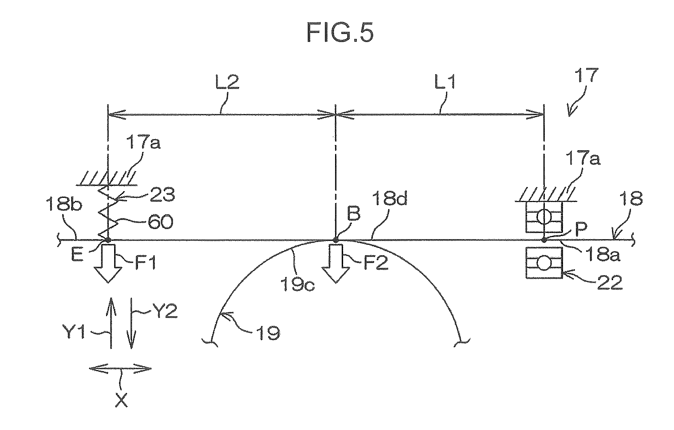

FIG. 5 is a diagram schematically showing the positional relation in the axial direction X among the meshing center B, the biased portion E, and the fulcrum portion P of the worm shaft 18.

Referring to FIG. 5, reference character L1 represents the distance between the meshing center B and the fulcrum portion P in the axial direction X in the worm shaft 18. Reference character L2 represents the distance between the meshing center B and the biased portion E in the axial direction X in the worm shaft 18. The distance L2 is larger than the distance L1. Although the distance L2 is 1.1 times the distance L1 in the present embodiment, the distance L2 may be 1.2 times the distance L1.

After long-term use of the worm speed reducer 17, backlash is usually produced between the meshing portion 18d of the worm shaft 18 and the tooth portion 19c of the worm wheel 19 due to wear of the resin tooth portion 19c of the worm wheel 19. If the backlash is produced, abnormal noise, which is called tooth knocking noise, is generated by the contact between the meshing portion 18d and the tooth portion 19c. In order to suppress the tooth knocking noise, the pressing load F2 needs to be increased to eliminate the backlash.

In the present embodiment, the distance L2 is larger than the distance L1 as compared to a worm speed reducer of a comparative example in which the distance L2 is equal to the distance L1.

That is, by changing the ratio between these distances (worm span ratio) to increase the distance between the meshing center B of the meshing portion 18d and the second end 18b, the pressing load F2 for the meshing portion 18d of the worm shaft 18 against the worm wheel 19 can be increased without changing the biasing load F1 of the biasing member 60, according to the principle of leverage.

The pressing load F2 can thus be increased while using this biasing member 60, namely without increasing the set load of the biasing member 60 and without changing the dimensions of the biasing member 60.

It is therefore preferable that the distance L2 be larger than 1.1 times the distance L1.

Since the pressing load F2 can be increased by merely changing the worm span ratio, the positional relation between the worm shaft 18 and the worm wheel 19 needs only to be changed, and the specifications of the worm shaft 18 and the worm wheel 19 need not to be changed. Since the specifications of the components of the worm speed reducer 17 need not to be changed according to the type of vehicle, cost for the worm speed reducer 17 can be reduced. The housing 17a needs to be changed according to the change in relative positions of the worm shaft 18 and the worm wheel 19 in the axial direction X. However, this does not significantly affect an increase in cost of the worm speed reducer 17 since the specifications of the housing 17a need to be changed according to the type of vehicle anyway.

As described above, the present embodiment can improve durability of the biasing member 60 and can reduce overall cost of the worm speed reducer 17.

Since the specifications of the biasing member 60 need not to be changed, the problem of the biasing member 60 in terms of layout is also solved. That is, design flexibility is increased.

The present invention is not limited to the above embodiment, and various modifications can be made without departing from the spirit and scope of the invention.

For example, the structure of the worm speed reducer 17 of the above embodiment may be applied to an oblique worm speed reducer in which the rotation center C1 of the worm shaft 18 is tilted with respect to the rotation center C2 of the worm wheel 19 as viewed in the increasing/decreasing direction Y.

## Claims

1. A worm speed reducer, comprising:
an electric motor that generates a driving force;
a worm wheel that has an outer peripheral surface having a tooth portion formed therein;
a worm shaft that has a first end located adjacent to the electric motor, a second end located on an opposite side of the first end, and a meshing portion located between the first and second ends and meshing the tooth portion of the worm wheel, and that rotates as the driving force of the electric motor is transmitted to the first end; and
a biasing member that biases the second end by use of the first end serving as a fulcrum so as to reduce a center-to-center distance between the worm wheel and the worm shaft; wherein
in the worm shaft, a distance between a meshing center of the meshing portion and the second end in an axial direction of the worm shaft is larger than that between the meshing center and the first end in the axial direction.

2. The worm speed reducer according to claim 1, wherein
the distance between the meshing center and the second end in the axial direction of the worm shaft is larger than 1.1 times the distance between the meshing center and the first end in the axial direction.

3. An electric power steering system, comprising:
the worm speed reducer according to claim 1 or 2.
